# EUROPEAN PATENT SPECIFICATION

(11) **EP 1 468 615 B1**
(45) Date of publication and mention of the grant of the patent: **19.12.2007**
(21) Application number: 03425228.8
(22) Date of filing: 11.04.2003
(51) Int. Cl.: A23L 1/40, A23L 1/28, A23L 1/221

(54) **A food preparation with a creamy consistency for use as a base for sauces**
Nahrungsmittel mit cremeförmiger Konsistenz zur Verwendung als Basis für Sossen
Produit alimentaire ayant une consistance crémeuse utilisé comme base pour sauces

(43) Date of publication of application: 20.10.2004
(73) Proprietor: Barilla G. e R. Fratelli S.p.A., 43100 Parma (IT)
(72) Inventor: Festa, Adriano, 43100 Parma (IT); Mascaro, Michele, 42025 Cavriago (Reggio Emilia) (IT); Dameno, Franco, 29100 Piacenza (IT)
(74) Representative: Ferreccio, Rinaldo

(56) References cited:
- EP-A- 0 970 619
- EP-A- 1 008 308
- EP-A- 1 060 671
- US-A- 4 237 146
- US-A- 4 291 066
- US-A1- 2001 026 829

## Description

The present invention refers, in general, to the technical sector of the foodstuff industry.

In particular, the invention concerns a concentrated food preparation suitable as the basic ingredient for the prompt production of sauces to serve with foods like pasta, rice and the like.

Well known to consumers are these so called ready-to-use sauces i.e., sauces based on tomatoes or on cream, béchamel or the like, produced according to traditional recipes by adding organoleptically characterizing ingredients like, for example mushrooms, green vegetables, garlic, onion etc..

Ready-to-use sauces are commonly packed in small glass jars or in tins and their conservation at room temperature is achieved by heat sterilization or pasteurization under quite drastic conditions.

These ready-to-use sauces have the great advantage of being ready to use but it is also known that the organoleptic properties of ready-to-use sauces never reach the analogous properties of freshly produced sauces, especially because they have been subjected to sterilization or pasteurization processes under drastic conditions that tend to attenuate flavor, or sometimes even modify it.

Also known are concentrated tomato based products, like the so-called double tomato concentrate that consists of tomato pulp subjected to a concentration process aimed at notably reducing water content and ensuring conservation.

These tomato concentrates are commonly used in the domestic preparation of sauces after appropriate dilution with water and the addition of organoleptically characterizing ingredients.

It is evident that tomato concentrates do not have the advantage of being a final product but are simply a substitute for fresh tomato.

Patent application EP 0 970 619 A2 (Unilever) discloses an ambient stable soup- or sauce base comprising (in percentages by weight): 10-70% fat or oil, 2-35% starch-based thickener, 10-60% water, 1-12% egg-yolk based emulsifier, 0.1 - 6% organic acids, 1-8% salt and 1-35% flavoring composition, wherein the pH of the composition is below 4.5.

Patent application EP 1 008 308 A1 (Bestfoods) discloses a creamy food comprising up to 78% in weight of vegetable matter, 1 to 40% in weight of fat and 0 to 5% in weight of starch.

The problem underlying the present invention is to make available a preparation for making, with great ease and minimal preparation times and according to traditional recipes, sauces that present organoleptic properties fully comparable with those of analogous sauces prepared with fresh ingredients.

This problem has been solved, according to the invention, by a pasteurized food preparation of creamy consistency containing, in weight percentage on total weight, 10 to 50% of edible fats, 30 to 70% of at least one organoleptically characterizing ingredient of vegetal origin, selected from the group including vegetables and mushrooms, characterized by a water activity (A_{w}) lower than or equal to 0.95 and a pH comprised between 4.0 and 5.0.

Preferably the edible fats fall within a weight percentage varying between 10 and 30% and said at least one organoleptically characterizing ingredient is within the range 50-70%.

Preferably the water activity of the preparation according to the invention is between 0.86 and 0.94.

The moisture content of the food preparation according to the invention is generally between 50 and 70%.

The edible fats contained in the preparation according to the invention are preferably selected from among vegetable oils with a low saturated fatty acid content, like the oils of maize, peanuts, sunflowers, soya, grape seeds and olives. The last is particularly preferred.

The pH can be adjusted by adding small quantities of organic acids of alimentary use, like citric, tartaric and lactic acids or else lemon juice or vinegar.

The preparation according to the invention can furthermore contain aromatic herbs, salt, spices and natural flavors.

The preparation according to the invention can be conveniently packaged in association with an essentially liquid, water-based foodstuff, like tomato juice or tomato pulp, cream, béchamel, milk and yogurt, which is intended to dilute the said foodstuff preparation.

Given the accurate control of A_{w} and pH, the preparation according to the invention becomes preservable following a mild pasteurizing heat treatment (e.g. at temperatures no higher than 100° for 1-3 minutes), whereas known ready sauces obligatorily require more drastic thermal treatment.

In this way, there is the maximum safeguarding of the organoleptic properties of the organoleptically characterizing ingredients.

The achievement of the low water activity value of the preparation according to the invention is permitted by the concentration treatment to which the organoleptically characterizing ingredients of vegetal origin are subjected before being mixed with other ingredients. Such concentration treatment is carried out under mild conditions and consists in the evaporation of water through heating, possibly at reduced pressure for those vegetals more susceptible to degradation.

Advantageously, the concentration is carried out in such manner as to obtain at the end a creamy product incorporating partially dehydrated particles of the same ingredient (e.g., a cream of peppers that contains small pieces of the said peppers).

The preparation according to the invention is to be used as a base to obtain sauces by means of simple dilution with oil, tomato sauce, cream, béchamel or the like.

For example, a preparation according to the invention, containing mushrooms as the characterizing organoleptic ingredient, allows the obtaining of a mushroom sauce simply by adding tomato pulp or tomato sauce, mixing, followed by heating in a saucepan or a microwave oven. Alternatively the above preparation can be diluted with oil, cream, béchamel, milk, butter or yogurt to obtain a white mushroom sauce.

One advantage evident from what has been stated regarding the preparation according to the invention is its versatility.

But the biggest advantage of the foodstuff preparation according to the invention lies in the organoleptic characteristics of the final sauce that is obtained by using the said preparation. Such characteristics do not fear comparison with those of an analogous sauce prepared promptly from fresh ingredients.

Further characteristics and advantages of the preparation according to the invention are highlighted by several examples, given in the following as illustrative and not limiting.

### EXAMPLE 1

| Mushroom sauce | |
|---|---|
| Olive oil | 30% |
| Mushrooms | 51 % |
| Starch | 8% |
| Aromatic herbs and spices | 7% |
| Salt | 2% |
| Lemon juice | 2% |

The above reported percentages are intended as weight per total weight of the preparation.

Fresh mushrooms with a moisture content around 90% were subjected to thermal treatment under vacuum to reduce the said moisture content to values around 60-70%. A part of the partially dehydrated mushrooms was reduced to a cream while the remaining mushrooms were reduced to pieces and added to the cream.

Finally there was the incorporation of olive oil, starch, aromatic herbs, lemon juice, salt and spices, obtaining a creamy preparation with a moisture content of 65%.

The water activity of the thus obtained preparation was 0.89 and the pH 4.2.

The preparation was then put into 100 ml jars and subjected to pasteurization at a temperature of 100°C for 1 - 2 minutes.

### EXAMPLE 2

| | |
|---|---|
| Oil | 25% |
| Peppers | 50% |
| Anchovies | 6% |
| Starch | 8% |
| Aromatic herbs and spices | 7% |
| Salt | 2% |
| Lemon juice | 2% |

The above reported percentages are intended as weight per total weight of the preparation.

The peppers were subjected to thermal treatment under vacuum to reduce their moisture content to values around 65%. A part of the partially dehydrated peppers was reduced to a cream while the remaining peppers were reduced to pieces and added to the cream.

Finally there was the incorporation of olive oil, finely chopped anchovies, starch, aromatic herbs, salt, lemon juice and spices, obtaining a creamy preparation with a moisture content of 63%.

The water activity of the thus obtained preparation is 0.90 and the pH 4.3.

The preparation was then put into 100 ml jars and subjected to pasteurization at a temperature of 98°C for 1 - 2 minutes.

### TEST OF ORGANOLEPTIC EVALUTATION

The concentrate preparation obtained according to Example 1, after conservation at 20°C for 30 days, was diluted with cream and milk in a ratio of preparation:cream:milk weight of 3:6:1 and was evaluated by a panel of tasters, comparing it with a mushroom sauce having the same qualitative and quantitative composition as the sauce obtained by diluting the concentrate preparation of Example 1 as just described, but prepared according to the classic procedure that does not foresee the initial concentration of the mushrooms nor the pasteurization, but only sterilization. Also this comparison sauce was kept at 20C° for 30 days.

The two sauces for comparison were used to dress spaghetti of identical format, using a weight ratio of pasta/ sauce equal to 1.

The tasters were asked to evaluate, in relation to different parameters, both the fragance and the taste of the two sauces, and the results are summarized for comparison purposes in tables 1 and 2.

**Table 1**

| Profile of flavor/fragrance | | |
|---|---|---|
| | Sauce obtained by preparation Ex. 1 | Sterilized sauce for comparison |
| Balance/fullness | 5 | 4 |
| Mushrooms | 5 | 4 |
| Milkiness | 4 | 4 |
| Creamy fattiness | 4 | 4-5 |
| Earthiness | 3 | 3 |
| Sweetness | 4 | 3 |
| Aromatic herbs | 3 | 2 |
| Saltiness | 3 | 3 |
| Cheese | 3 | 2 |
| Garlic | 4 | 2 |
| Bitterness | 3 | 3 |
| Spices/pepper | 2 | 2 |
| Acidity | 2-3 | 3 |

**Table 2**

| Profile of Taste | | |
|---|---|---|
| | Sauce obtained by preparation Ex. 1 | Sterilized sauce for comparison |
| Balance/fullness | 4-5 | 4 |
| Mushroom | 5 | 3-4 |
| Milkiness | 4 | 4 |
| Creamy/fattiness | 4 | 5 |
| Earthiness | 3 | 3 |
| Sweetness | 4 | 3-4 |
| Aromatic herbs | 3 | 2 |
| Saltiness | 4 | 3 |
| Cheese | 3 | 3 |
| Garlic | 3-4 | 3 |
| Bitterness | 2-3 | 3 |
| Spices/pepper | 2-3 | 2 |
| Acidity | 3 | 3 |
| Starchiness | 3 | 3 |
| Waxiness | 3 | 3-4 |
| Waterishness | 3 | 3-4 |
| Oiliness | | 2-3 |
| Flour | 2 | |
| Binding in mouth | 3 | 3 |
| Metallic | 2-3 | 2-3 |
| Cause mouthwatering | 3 | 3 |

From the data in the previous tables it is understood that the sauce obtained by the concentrate preparation according to example 1 is fuller and more fragrant than the sterilized sauce for comparison. In addition, with regard to fragrance there was a more intense aroma of mushrooms, the organoleptically characterizing ingredient, and of aromatic herbs and sweetness.

With regard to taste, once again there was a greater intensity of mushroom notes and furthermore the sauce obtained using the preparation according to the invention was less cream tasting and less fatty at the tasting.

Furthermore it is worth noting that in the sauce obtained from the preparation according to the invention there is the absence of the touch of oiliness noted in the compared sterilized preparation.

Finally, the sauce obtained by the concentrated preparation according to the invention demonstrated a decidedly better dressing quality than that of the comparison preparation.

## Claims

1. A pasteurized foodstuff preparation of creamy consistency, to be used as a base for sauces, containing, in percentage of weight per total weight, 10 to 50% of edible fats, and 30 to 70% of at least one organoleptically characterizing ingredient of vegetal origin, selected from the group comprising mushrooms and vegetables, **characterized by** a water activity (A_{w}) less than or equal to 0.95 and a pH comprised between 4.0 and 5.0.

2. A foodstuff preparation according to Claim 1, wherein said edible fats constitute 10-30% and said at least one organoleptically characterizing ingredient constitutes 50 to 70% in weight per total preparation weight.

3. A foodstuff preparation according to Claim 1 or 2, wherein the water activity lies between 0.86 and 0.94.

4. A foodstuff preparation according to any one of the preceding claims, wherein said edible fats are chosen from among vegetal oils with a low saturated fatty acid content.

5. A foodstuff preparation according to Claim 4, wherein said oils are chosen from the group including the oil of maize, peanuts, sunflowers, soya, grape seeds and olives and mixtures thereof.

6. A foodstuff preparation according to any one of the preceding claims, containing further aromatic herbs and/or spices.

7. A foodstuff preparation according to any one of the preceding claims, **characterized in that** said at least one organoleptically characterizing ingredient of vegetal origin is present in part in finely subdivided form and in part in the form of discrete pieces.

8. A kit for the preparation of a sauce to dress pasta, rice and the like, including a pasteurized food preparation according to any one of the preceding claims and an essentially liquid and water-based foodstuff, like a tomato sauce or pulp, cream, béchamel, milk and yogurt, which is intended to dilute the said alimentary preparation.

9. A process for the production of a foodstuff preparation according to any one of Claims 1 to 7, including the steps of:
- reducing said at least one organoleptically characterizing ingredient of vegetal origin into pieces of appropriate size;
- subjecting it to a concentration treatment under mild conditions, in order to take the water activity (A_{w}) to a value lower than or equal to 0.95;
- reducing to cream a part of the concentrated at least one organoleptically characterizing ingredient;
- mixing the said ingredient in pieces and in cream with edible fats and the further optional ingredients;
- adjusting the pH of the thus obtained mixture to a value comprised between 4.0 and 5.0; and
- subjecting said mixture to a mild pasteurization treatment.

## Patentansprüche

1. Pasteurisierte Nahrungsmittelzubereitung von cremiger Konsistenz, die als Basis für Saucen zu verwenden ist und in Gewichtsprozent pro Gesamtgewicht 10 bis 50 % Speisefette und 30 bis 70 % wenigstens einer organoleptisch kennzeichnenden Zutat pflanzlichen Ursprungs enthält, die aus der Gruppe ausgewählt ist, die Pilze und Gemüse umfasst, **gekennzeichnet durch** eine Wasseraktivität (A_{w}) von kleiner oder gleich 0,95 und einen pH-Wert zwischen 4,0 und 5,0.

2. Nahrungsmittelzubereitung nach Anspruch 1, wobei die Speisefette 10 bis 30 % und die wenigstens eine organoleptisch kennzeichnende Zutat 50 bis 70 Gew.-% pro Gesamtgewicht der Zubereitung ausmachen.

3. Nahrungsmittelzubereitung nach Anspruch 1 oder 2, wobei die Wasseraktivität zwischen 0,86 und 0,94 liegt.

4. Nahrungsmittelzubereitung nach einem der vorhergehenden Ansprüche, wobei die Speisefette aus pflanzlichen Ölen mit einem niedrigen gesättigten Fettsäuregehalt ausgewählt sind.

5. Nahrungsmittelzubereitung nach Anspruch 4, wobei die Öle aus der Gruppe ausgewählt sind, die Maisöl, Erdnussöl, Sonnenblumenöl, Sojaöl, Traubenkernöl und Olivenöl sowie Mischung davon umfasst.

6. Nahrungsmittelzubereitung nach einem der vorhergehenden Ansprüche, darüber hinaus aromatische Kräuter und/oder Gewürze enthaltend.

7. Nahrungsmittelzubereitung nach einem der vorhergehenden Ansprüche, **dadurch gekennzeichnet, dass** die wenigstens eine organoleptisch kennzeichnende Zutat pflanzlichen Ursprungs zum Teil in fein verteilter Form und zum Teil in Form einzelner Stücke vorhanden ist.

8. Packung zur Herstellung einer Sauce zur Verfeinerung von Nudeln, Reis und dergleichen, mit einer pasteurisierten Nahrungsmittelzubereitung nach einem der vorhergehenden Ansprüche und einem im Wesentlichen flüssigen und auf Wasser basierenden Nahrungsmittel, wie Tomatensauce oder Tomatenmark, Sahne, Bechamelsauce, Milch und Joghurt, das zur Verdünnung der Nahrungsmittelzubereitung gedacht ist.

9. Verfahren zur Herstellung einer Nahrungsmittelzubereitung nach einem der Ansprüche 1 bis 7, folgende Schritte umfassend:
- Zerkleinern der wenigstens einen organoleptisch kennzeichnenden Zutat pflanzlichen Ursprungs in Stücke von angemessener Größe;
- Unterziehen dieser Zutat einer Konzentrationsbehandlung unter milden Bedingungen, um die Wasseraktivität (A_{w}) auf einen Wert von kleiner oder gleich 0,95 zu bringen;
- Reduzieren eines Teils der konzentrierten, wenigstens einen organoleptisch kennzeichnenden Zutat zu einer Creme;
- Vermischen der in Stücken und als Creme vorliegenden Zutat mit Speiseölen und den weiteren, optionalen Zutaten;
- Einstellen des pH-Werts der so erhaltenen Mischung auf einen Wert zwischen 4,0 und 5,0; und
- Unterziehen der Mischung einer milden Pasteurisationsbehandlung.

## Revendications

1. Préparation alimentaire pasteurisée de consistance crémeuse, à utiliser en tant que base pour des sauces, contenant, en pourcentage en poids par rapport au poids total, 10 à 50% de graisses comestibles, et 30 à 70% d'au moins un ingrédient d'origine végétale caractéristique au niveau organoleptique, choisi dans le groupe comprenant les champignons et les légumes, **caractérisée par** une activité de l'eau (A_{w}) inférieure ou égale à 0,95 et un pH compris entre 4,0 et 5,0.

2. Préparation alimentaire selon la revendication 1, dans laquelle lesdites graisses comestibles représentent 10 à 30% et ledit au moins un ingrédient caractéristique au niveau organoleptique représente 50 à 70% en poids par rapport au poids de préparation total.

3. Préparation alimentaire selon la revendication 1 ou 2, dans laquelle l'activité de l'eau se situe entre 0,86 et 0,94.

4. Préparation alimentaire selon l'une quelconque des revendications précédentes, dans laquelle lesdites graisses comestibles sont choisies parmi des huiles végétales présentant une faible teneur en acides gras saturés.

5. Préparation alimentaire selon la revendication 4, dans laquelle lesdites huiles sont choisies dans le groupe consistant en l'huile de maïs, l'huile d'arachide, l'huile de tournesol, l'huile de soja, l'huile de pépins de raisin et l'huile d'olive et des mélanges de celles-ci.

6. Préparation alimentaire selon l'une quelconque des revendications précédentes, contenant en outre des herbes aromatiques et/ou des épices.

7. Préparation alimentaire selon l'une quelconque des revendications précédentes, **caractérisée en ce que** ledit au moins un ingrédient d'origine végétale caractèristique au niveau organoleptique est présent en partie sous forme finement divisée et en partie sous forme de petits morceaux.

8. Kit de préparation pour une sauce d'accompagnement pour des pâtes, du riz, et autres, comprenant une préparation alimentaire pasteurisée selon l'une quelconque des revendications précédentes et un aliment essentiellement liquide et à base d'eau, tel qu'une sauce ou une pulpe de tomate, de la crème, de la béchamel, du lait et du yaourt, qui est destiné à diluer ladite préparation alimentaire.

9. Procédé de fabrication d'une préparation alimentaire selon l'une quelconque des revendications 1 à 7, comprenant les étapes de :
- réduction dudit au moins un ingrédient d'origine végétale caractéristique au niveau organoleptique en morceaux de taille appropriée ;
- soumission de ceux-ci à un traitement de concentration dans des conditions douces, de manière à atteindre une activité de l'eau (A_{w}) à une valeur inférieure ou égale à 0,95 ;
- réduction en crème d'une partie du au moins un ingrédient caractéristique au niveau organoleptique concentré ;
- mélange dudit ingrédient en morceaux et en crème avec les graisses comestibles et les éventuels ingrédients supplémentaires ;
- ajustement du pH du mélange ainsi obtenu à une valeur comprise entre 4,0 et 5,0 ; et
- soumission dudit mélange à un traitement de pasteurisation dans des conditions douces.
